# EUROPEAN PATENT APPLICATION

(11) **EP 4 685 622 A1**
(43) Date of publication of application: **28.01.2026**
(21) Application number: 24774134.1
(22) Date of filing: 20.03.2024
(51) Int. Cl.: G06F 3/04815

(54) **INTERACTION METHOD AND APPARATUS, DEVICE, MEDIUM AND PROGRAM**

(30) Priority: 21.03.2023 CN 202310280532
(71) Applicant: Beijing Zitiao Network Technology Co., Ltd., Beijing 100190 (CN)
(72) Inventor: WANG, Kexin, Beijing 100028 (CN)
(74) Representative: Isarpatent
(86) International application number: PCT/CN2024/082632
(87) International publication number: WO 2024/193569

(57) **Abstract**

Provided in embodiments of the present application are an interaction method and apparatus, a device, a medium and a program. The method comprises: displaying an interaction panel in an extended reality scene; and according to a first operation on the interaction panel, controlling the interaction panel to execute a first preset operation, the first preset operation comprising: displaying around a target model and moving along with the target model, and the target model being a virtual model of a controller corresponding to the extended reality scene. According to the described method, an interaction panel may move along with a user, facilitating the user operating the interaction panel. For the user, it is equivalent to moving the interaction panel in his or her hand, which is more in line with user operations in real scenes and brings the user a better experience.

## Description

The present application claims priority to Chinese Patent Application No. 202310280532.4 filed on March 21, 2023, the disclosure of which is hereby incorporated by reference in its entirety as part of the present application.

### TECHNICAL FIELD

Embodiments of the present application relate to an interaction method, an apparatus, a device, a medium, and a program.

### BACKGROUND

Extended reality (XR) refers to combining real and virtual by using a computer to create a virtual environment allowing human-computer interaction. XR is also a general term for a variety of technologies such as virtual reality (VR), augmented reality (AR), and mixed reality (MR). By integrating the visual interaction technologies of the three, the experiencer is provided with a seamless transition between the virtual world and the real world.

In an XR scene, to meet the personalized needs of users, a user generated content (UGC) function is added, that is, a user can customize a virtual scene by using elements such as material in a provided editor according to their own needs. When customizing a virtual scene, the user needs to frequently use an interaction panel, for example, place the interaction panel in a space in front of the user.

### SUMMARY

Embodiments of the present application provide an interaction method, an apparatus, a device, a medium, and a program.

In a first aspect, an embodiment of the present application provides an interaction method, including:
displaying an interaction panel in an extended reality scene; and
controlling the interaction panel to perform a first preset operation in response to a first operation on the interaction panel, where the first preset operation includes: being displayed around a target model and moving with the target model, and the target model is a virtual model of a controller corresponding to the extended reality scene.

In some embodiments, the interaction panel has a three-dimensional 3D grippable part; and
controlling the interaction panel to perform the first preset operation in response to the first operation on the interaction panel includes:
controlling the interaction panel to perform the first preset operation in response to a first operation on the grippable part of the interaction panel.

In some embodiments, the first preset operation further includes: being zoomed out to a preset size.

In some embodiments, controlling the interaction panel to perform the first preset operation in response to the first operation on the interaction panel includes:
controlling the interaction panel to move in response to a moving operation on the interaction panel; and
controlling the interaction panel to perform the first preset operation when it is detected that a distance between the interaction panel and the target model is less than a first preset distance.

In some embodiments, before controlling the interaction panel to move in response to the moving operation on the interaction panel, the method further includes:
displaying prompt information in response to a second operation on the interaction panel, where the prompt information is used to prompt to move the interaction panel towards the target model.

In some embodiments, the prompt information is a trajectory guide line, a start point of the trajectory guide line is the interaction panel, and an end point of the trajectory guide line is the target model.

In some embodiments, controlling the interaction panel to perform the first preset operation in response to the first operation on the interaction panel includes:
displaying a hot area at the target model in response to a third operation on the interaction panel;
controlling the interaction panel to move in response to the moving operation on the interaction panel; and
controlling the interaction panel to perform the first preset operation when it is detected that the interaction panel moves into the hot area.

In some embodiments, a guide line is further displayed in the extended reality scene, a start point of the guide line is the interaction panel, and an end point of the guide line points to the hot area through an arrow.

In some embodiments, after controlling the interaction panel to perform the first preset operation in response to the first operation on the interaction panel, the method further includes:
controlling the interaction panel to cancel performing the first preset operation and displaying the interaction panel in the extended reality scene in response to a fourth operation on the interaction panel.

In some embodiments, after controlling the interaction panel to perform the first preset operation in response to the first operation on the interaction panel, the method further includes:
in response to a fifth operation on the interaction panel, controlling the interaction panel to cancel performing the first preset operation and displaying the interaction panel in the extended reality scene after zooming in the interaction panel to a standard size.

In some embodiments, controlling the interaction panel to cancel performing the first preset operation in response to the fourth operation on the interaction panel includes:
controlling the interaction panel to move in response to the moving operation on the interaction panel; and
controlling the interaction panel to cancel performing the first preset operation when it is detected that the distance between the interaction panel and the target model is greater than a second preset distance.

In some embodiments, in response to the fifth operation on the interaction panel, controlling the interaction panel to cancel performing the first preset operation and displaying the interaction panel in the extended reality scene after zooming in the interaction panel to a standard size includes:
controlling the interaction panel to move in response to the moving operation on the interaction panel; and
when it is detected that a distance between the interaction panel and the target model is greater than a second preset distance, controlling the interaction panel to cancel performing the first preset operation displaying the interaction panel in the extended reality scene after zooming in the interaction panel to the standard size.

In some embodiments, the first preset operation further includes: controlling an attitude of the interaction panel to change according to an attitude of the target model.

In some embodiments, the first preset operation further includes: controlling an attitude of the interaction panel to change according to an attitude of a user's perspective.

In some embodiments, the interaction panel is displayed at a preset position of the target model.

In some embodiments, after controlling the interaction panel to cancel performing the first preset operation, the interaction panel is displayed at a release position of the moving operation.

In some embodiments, after controlling the interaction panel to cancel performing the first preset operation, the interaction panel is displayed at a preset relative position of the target model.

In another aspect, an embodiment of the present application provides an interaction apparatus, including:
a display module, configured to display an interaction panel in an extended reality scene; and
a control module, configured to control the interaction panel to perform a first preset operation in response to a first operation on the interaction panel, where the first preset operation includes: being displayed around a target model and moving with the target model, and the target model is a virtual model of a controller corresponding to the extended reality scene.

In another aspect, an embodiment of the present application provides an XR device, including: a processor and a memory, where the memory is configured to store a computer program, and the processor is configured to invoke and run the computer program stored in the memory to perform the method according to any one of the above embodiments.

In another aspect, an embodiment of the present application provides a computer-readable storage medium, configured to store a computer program, where the computer program causes a computer to perform the method according to any one of the above embodiments.

In another aspect, an embodiment of the present application provides a computer program product, including a computer program, where when the computer program is executed by a processor, the method according to any one of the above embodiments is implemented.

### BRIEF DESCRIPTION OF DRAWINGS

In order to illustrate the technical solutions in the embodiments of the present invention more clearly, the drawings for describing the embodiments will be briefly described below. Apparently, the drawings in the following description show merely some embodiments of the present invention, and a person of ordinary skill in the art may derive other drawings from these drawings without creative efforts.
Fig. 1 is a flowchart of an interaction method according to embodiment one of the present application;
Fig. 2 is a schematic diagram illustrating a display of an interaction panel in an extended reality scene;
Fig. 3 is a schematic diagram illustrating a display of an interaction panel after a first preset operation is performed;
Fig. 4 is a flowchart of an interaction method according to embodiment two of the present application;
Fig. 5 is a flowchart of an interaction method according to embodiment three of the present application;
Fig. 6 is a schematic diagram of a process of attracting an interaction panel to a target model;
Fig. 7 is a schematic diagram of a process of placing an interaction panel attracted to a target model into an extended reality space;
Fig. 8 is a flowchart of an interaction method according to embodiment four of the present application;
Fig. 9 is a schematic diagram of a structure of an interaction apparatus according to embodiment five of the present application; and
Fig. 10 is a schematic diagram of a structure of an XR device according to embodiment six of the present application.

### DETAILED DESCRIPTION

The technical solutions in the embodiments of the present invention will be described clearly and comprehensively below with reference to the drawings in the embodiments of the present invention. Apparently, the described embodiments are merely a part of but not all embodiments of the present invention. All other embodiments obtained by a person of ordinary skill in the art based on the embodiments of the present invention without creative efforts shall fall within the protection scope of the present invention.

It should be noted that the terms "first" and "second" in the specification and claims of the present invention and the above drawings are used to distinguish between similar objects, and are not necessarily used to describe a specific order or sequence. It should be understood that data used in this manner may be interchanged as appropriate so that the embodiments of the present invention described herein may be implemented in a sequence other than those illustrated or described herein. In addition, the terms "include/comprise" and "have" and any variations thereof are intended to cover non-exclusive inclusion. For example, a process, method, system, product, or server including a series of steps or units is not necessarily limited to those clearly listed steps or units, but may include other steps or units not clearly listed or inherent to these processes, methods, products, or devices.

To facilitate understanding of the embodiments of the present application, some concepts involved in all embodiments of the present application will be appropriately explained and described before the embodiments of the present application are described. The details are as follows:
XR is a general term for VR, AR, and AR technologies. XR devices include but are not limited to VR devices, AR devices, and MR devices.
VR: technology for creating and experiencing a virtual world. A virtual environment is generated through computation. VR uses multi-source information (the virtual reality mentioned herein at least includes visual perception, and may further include auditory perception, tactile perception, motion perception, or even gustatory perception, olfactory perception, etc.) to implement the simulation of integrated and interactive three-dimensional dynamic scene and entity behavior in virtual environments, so that users are immersed in a simulated virtual reality environment to implement applications of various virtual environments such as maps, games, videos, education, medical care, simulation, collaborative training, sales, assistive manufacturing, maintenance, and repair.
A VR device refers to a terminal that implements a virtual reality effect, and may usually be provided in the form of glasses, a head-mounted display (HMD), or contact lenses for implementing visual perception and other forms of perception. Certainly, the form implemented by the virtual reality device is not limited thereto, and may be further miniaturized or enlarged as required.
AR: An AR setting refers to a simulated setting in which at least one virtual object is superimposed on a physical setting or a representation of the physical setting. For example, an electronic system may have an opaque display and at least one imaging sensor, where the imaging sensor is configured to capture an image or a video of the physical setting, and the image or the video is a representation of the physical setting. The system combines the image or the video with the virtual object, and displays the combination on the opaque display. An individual uses the system to view the physical setting indirectly via the image or the video of the physical setting and observe the virtual object superimposed on the physical setting. When the system uses one or more image sensors to capture the image of the physical setting and uses those images to present the AR setting on the opaque display, the displayed image is referred to as video see-through Transmission. Alternatively, an electronic system used to display the AR setting may have a transparent or semi-transparent monitor, and an individual may directly view the physical setting through the monitor. The system may display the virtual object on the transparent or semi-transparent monitor, so that the individual uses the system to observe the virtual object superimposed on the physical setting. For another example, the system may include a projection system that projects the virtual object into the physical setting. The virtual object may be projected, for example, on a physical surface or as a hologram, so that the individual uses the system to observe the virtual object superimposed on the physical setting. Specifically, in a process of capturing an image by a camera, camera posture parameters of the camera in a real world (or a three-dimensional world or a real world) are calculated in real time, and a virtual element is added to the image captured by the camera based on the camera posture parameters. The virtual element includes but is not limited to: an image, a video, and a three-dimensional model. The objective of the AR technology is to overlay a virtual world on a real world on a screen for interaction.
MR: A virtual scene information is presented in a real scene, and an interactive feedback information loop is built between a real world, a virtual world, and a user, so as to enhance the realness of the user experience. For example, a computer-created sensory input (for example, a virtual object) and a sensory input from a physical setting or a representation of the sensory input from the physical setting are integrated into a simulated setting, and in some MR settings, the computer-created sensory input may be adapted to a change in the sensory input from the physical setting. In addition, some electronic systems for presenting the MR setting may monitor an orientation and/or a position relative to the physical setting, so that the virtual object can interact with a real object (that is, a physical element from the physical setting or a representation of the physical element). For example, the system may monitor a motion, so that a virtual plant looks stationary relative to a physical building.

A virtual reality device (VR device) is a terminal that implements a virtual reality effect, and may usually be provided in the form of glasses, a head-mounted display (abbreviated as HMD), or contact lenses, so as to implement visual perception and other forms of perception. Certainly, the form implemented by the virtual reality device is not limited thereto, and may be further miniaturized or enlarged as required.

Optionally, the virtual reality device (that is, the XR device) described in the embodiments of the present application may include but are not limited to the following types:
1) Mobile virtual reality device, which supports setting a mobile terminal (such as a smartphone) in various manners (such as a head-mounted display provided with a dedicated card slot). The mobile virtual reality device is wired or wireless connection with the mobile terminal, so that the mobile terminal may perform related computation of a virtual reality function and output data to the mobile virtual reality device, for example, a virtual reality video may be watched through an APP of the mobile terminal.
2) All-in-one virtual reality device, which is provided with a processor for performing related computation of a virtual function, and thus has independent virtual reality input and output functions, and does not need to be connected to a PC or a mobile terminal, and has high use freedom.
3) PC-side virtual reality (PCVR) device, which uses a PC side to perform related computation and data output of a virtual reality function, and an external PC-side virtual reality device uses data output by the PC side to implement a virtual reality effect.

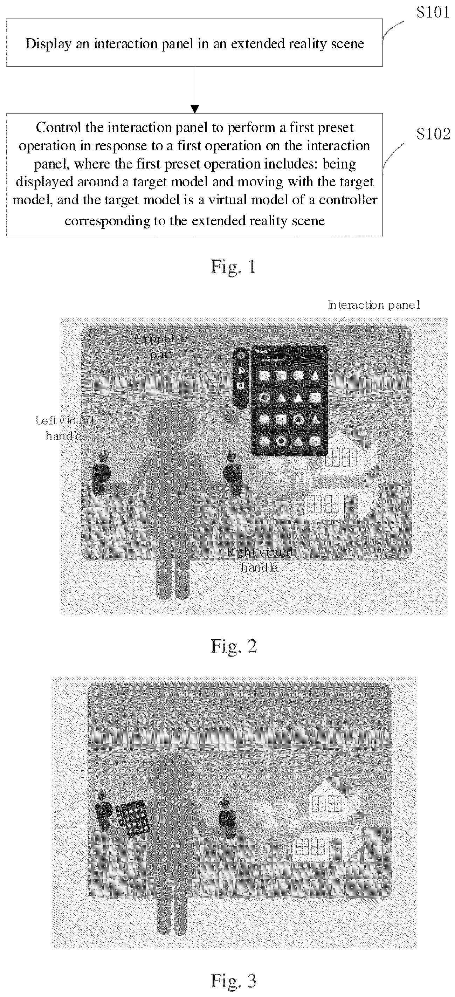

Fig. 1 is a flowchart of an interaction method according to embodiment one of the present application. The method is applied to electronic devices such as XR devices, electronic devices, and personal computers. This embodiment is mainly described by using an XR device as an example. As shown in Fig. 1, the method provided in this embodiment includes the following steps.

S101: Display an interaction panel in an extended reality scene.

The virtual scene may be a 3D extended reality scene provided by an XR device, or a 2D virtual scene provided by a mobile phone, a computer, or the like.

The extended reality scene is a 3D virtual scene, which may be a scene provided by a client or a scene defined by a user. Taking an XR device as an example, to meet the personalized needs of users, a UGC function is added, that is, a user can customize a virtual scene in an editor provided by a game according to their own needs. The virtual scene customized by the user is also referred to as a world of the user, and other users may enter the virtual scene customized by the user for playing.

The editor may provide some editing elements such as polyhedrons, controls, materials, physics, logic, music, sound effects, effects, and materials for users to use, and the user can customize a virtual scene in the editor. The virtual scene customized by the user may be referred to as a UGC world or a UGC scene. Customization in the embodiments of the present application may be understood as a scene formed by a user independently building in an editor by using editing elements provided by the editor.

In a process of creating the extended reality scene, the user needs to add or delete a virtual object in the extended reality scene, and also needs to set and view parameters, attributes, functions, and the like of the virtual object in the extended reality scene. The virtual object in the extended reality scene may be an object, a prop, a control, or the like in the extended reality scene, and the object may be a plant, an animal, a building, or the like in the extended reality scene. The virtual object may be a user-defined object or an object provided by the system.

In the process of creating the extended reality scene, the user interacts with the extended reality scene through an interaction panel, and the interaction panel may be a tool panel. The tool panel may be used to create a virtual object, and the user newly creates a prop, a material, a control, a polyhedron, or the like through the tool panel. The tool panel may also be used to perform other settings for the extended reality scene, which will not be described one by one here.

The interaction panel may also be an attribute panel of the virtual object, and the attribute panel displays parameters, attributes, functions, and the like of the virtual object. The user may modify and view the attributes, functions, and the like of the virtual object on the attribute panel, and the attribute panel is also referred to as a setting panel.

It may be understood that after the extended reality scene is created, the interaction panel may be opened in a process of the user playing the extended reality scene. The interaction panel is displayed in the extended reality scene in response to receiving an opening instruction of the interaction panel.

The user may perform a click operation, a double-click operation, a hover operation, a long press operation, or the like on a control, a menu bar, or a virtual object in the extended reality scene to open the interaction panel.

The virtual object is operated to open the interaction panel of the virtual object, and the opening instruction of the interaction panel may be the user's operation on the virtual object.

When receiving the opening instruction of the interaction panel, the XR device opens the interaction panel and displays the interaction panel in the extended reality scene. The interaction panel may be displayed at a preset position in the extended reality scene, or a display position of the interaction panel when the interaction panel is locally opened may be determined based on a position of the interaction panel after the last movement. For example, the interaction panel is displayed at the position after the last movement.

S102: Control the interaction panel to perform a first preset operation in response to a first operation on the interaction panel, where the first preset operation includes: being displayed around a target model and moving with the target model, and the target model is a virtual model of a controller corresponding to the extended reality scene.

**In** some examples, after the interaction panel is opened, the interaction panel is displayed at a fixed position in the extended reality scene, and the user may move the interaction panel, for example, the user drags the interaction panel to a desired position by using an interaction ray. However, in a process of the user moving, the interaction panel does not move with the user, and the interaction panel may block the virtual scene. After the user moves the interaction panel, if the interaction panel is not within the sight of the user, the user may need to reopen the interaction panel. Alternatively, when the interaction panel is far away from the user, it is inconvenient for the user to operate the interaction panel.

To solve the above problem, embodiments of the present application provide an interaction method, which enables the interaction panel to move with the user, so that the interaction panel can be conveniently operated.

For the interaction panel in the extended reality scene, if the user needs the interaction panel to move with the user, the user performs a first operation on the interaction panel, and the first operation includes but is not limited to a click, a double-click, a hover operation, a long press, an impact, a moving operation, a specific gesture trigger, or other operations on the interaction panel.

In this embodiment, when the first operation is detected, the interaction panel is controlled to perform the first preset operation according to the first operation, and the first preset operation includes:
being displayed around the target model and moving with the target model. The interaction panel is displayed around the target model and moves with the target model, which may be understood as that the interaction panel is attracted to the target model, or the interaction panel is bound to the target model.
When the user needs to operate the interaction panel, the user may directly operate the interaction panel attracted to the target model. The interaction panel may be placed back into the extended reality scene,
that is, the first preset operation is cancelled, or it may be understood as that the attraction relationship or
the binding relationship between the interaction panel and the target model is released, and then the interaction panel is operated.

The target model is a virtual model of a controller corresponding to the extended reality scene, the controller corresponding to the extended reality scene is a physical controller of the XR device, the target model may be a virtual handle or a virtual hand model, or may be a virtual hand model plus a handle. The target model is displayed in the extended reality scene, and moves with a user's perspective, for example, to simulate a user operation.

When the interaction panel moves with the target model, the interaction panel may be displayed at a preset position of the target model, for example, on the right side, directly in front, or right in front of the target model. The interaction panel may be in contact with the target model, or may not be in contact with the target model.

Optionally, when the interaction panel moves with the target model, a position of the interaction panel at the target model may be moved, for example, the interaction panel is moved from the right side of the target model to directly in front of the target model.

There are usually two virtual models of the controller corresponding to the extended reality scene, for example, a left virtual handle and a right virtual handle, a virtual left hand model and a virtual right hand model. In this case, the target model may be any one of the two virtual models, and usually the target model is a virtual model that is not frequently used by the user. In an actual scene, the user uses the right hand or the right handle more often. Therefore, the left virtual handle or the virtual left hand model may be used as the target model.

Optionally, the interaction panel has a three-dimensional 3D grippable part, and the user performs the first operation on the grippable part to trigger the interaction panel to move with the target model. Correspondingly, the interaction panel is controlled to perform the first preset operation in response to the first operation on the grippable part of the interaction panel. Usually, the interaction panel is a two-dimensional plane without thickness, and the user cannot conveniently view the interaction panel and perform the first operation on the interaction panel at some angles. When the interaction panel has the 3D grippable part, since the 3D grippable part has a thickness in a thickness direction of the interaction panel or the thickness of the 3D grippable part is greater than the thickness of the interaction panel, the user can conveniently view the 3D grippable part and accurately perform the first operation on the 3D grippable part at various angles.

Fig. 2 is a schematic diagram illustrating a display of an interaction panel in an extended reality scene. As shown in Fig. 2, a 3D grippable part is displayed at an upper left corner of the interaction panel, and two virtual handles are further displayed in the extended reality scene. It may be understood that the virtual character shown in the figure is displayed in some scenes and is not displayed in some scenes. In the embodiments of the present application, the virtual character may or may not be displayed in the extended reality scene, and the interaction panel may move with the virtual handle.

Fig. 3 is a schematic diagram illustrating a display of an interaction panel after a first preset operation is performed. Referring to Fig. 2 and Fig. 3, after the user performs the first operation on the interaction panel, the interaction panel is displayed on the right side of the left virtual handle and moves with the left virtual handle.

Comparing Fig. 2 and Fig. 3, the interaction panel displayed on the right side of the left virtual handle is zoomed out, that is, the first preset operation may further include zooming out the interaction panel to a preset size.

Zooming out the interaction panel to the preset size is an optional step, the interaction panel may not be zoomed out, and the interaction panel is directly displayed around the target model and moves with the target model.

Optionally, the first preset operation further includes: controlling an attitude of the interaction panel to change according to an attitude of the target model. That is, the interaction panel not only changes according to a position of the target model. For example, when the target model raises an arm, the interaction panel is also raised accordingly, and an angle of the interaction panel also rotates with an attitude of the target model. For example, when the target model turns left, the interaction panel also turns left with the target model.

Alternatively, the first preset operation further includes: controlling an attitude of the interaction panel to change according to an attitude of a user's perspective. That is, the attitude of the interaction panel changes with the user's perspective, and when the user's perspective turns, the interaction panel turns accordingly, so that the attitude of the interaction panel can always face the user, so that the user can see the interaction panel at any perspective, and the interaction panel is not blocked due to the attitude change.

In this embodiment, the interaction panel is displayed in the extended reality scene, and the interaction panel is controlled to perform the first preset operation according to the first operation on the interaction panel, where the first preset operation includes: being displayed around the target model and moving with the target model, and the target model is the virtual model of the controller corresponding to the extended reality scene. This method enables the interaction panel to move with the user, which is convenient for the user to operate the interaction panel. For the user, it is equivalent to holding the interactive panel in hands and moving it, which is more in line with the user's operation in the physical scene and brings a better experience to the user.

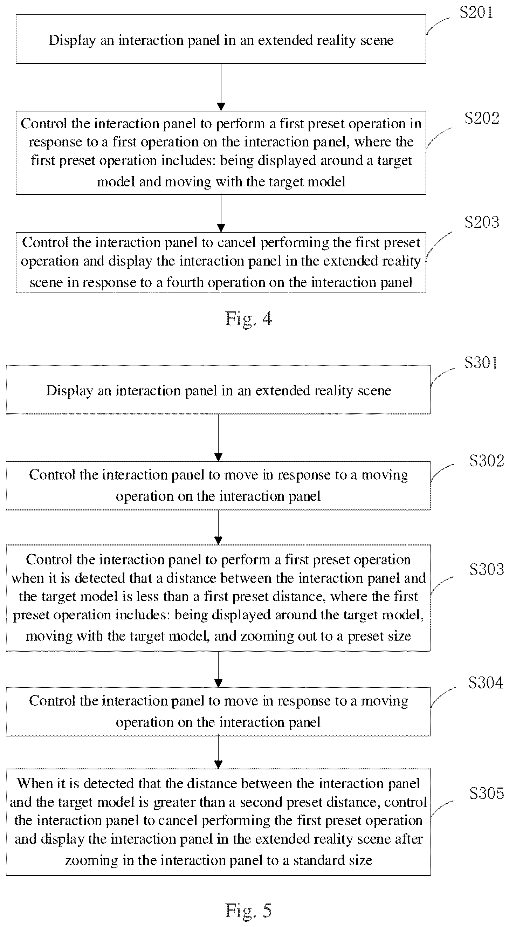

Based on embodiment one, embodiment two of the present application provides an interaction method. The user may also cancel the first preset operation and place the interaction panel back into the extended reality space. For the same content, reference may be made to the description of embodiment one, and the details will not be described in this embodiment again. Fig. 4 is a flowchart of an interaction method according to embodiment two of the present application. As shown in Fig. 4, the method provided in this embodiment includes the following steps.

S201: Display an interaction panel in an extended reality scene.

S202: Control the interaction panel to perform a first preset operation in response to a first operation on the interaction panel, where the first preset operation includes: being displayed around a target model and moving with the target model.

S203: Control the interaction panel to cancel performing the first preset operation and display the interaction panel in the extended reality scene in response to a fourth operation on the interaction panel.

In a process of the interaction panel moving with the target model, if the user needs to operate the interaction panel, the interaction panel may be placed back into the extended reality scene through the fourth operation. Alternatively, if the user no longer needs the interaction panel to move with the target model, the interaction panel may be placed back into the extended reality scene through the fourth operation.

After the interaction panel cancels performing the first preset operation, the interaction panel is displayed in the extended reality scene, and the interaction panel no longer moves with the target model.

The fourth operation includes but is not limited to a click, a double-click, a hover operation, a long press, an impact, a moving operation, a specific gesture trigger, or other operations on the interaction panel. For example, the user moves the interaction panel from the target model to any position in the extended reality space, and when the moving operation is detected, the first preset operation is cancelled, so that the interaction panel is placed back into the extended reality scene, and the interaction panel no longer moves with the target model.

If the first preset operation includes zooming out the interaction panel to a preset size, in other embodiments of the present application, when receiving a fifth operation on the interaction panel, the interaction panel is controlled to cancel performing the first preset operation, and the interaction panel is zoomed in to a standard size and displayed in the extended reality scene. The fifth operation may be the same as the fourth operation.

If the fourth operation or the fifth operation is the moving operation, after the interaction panel is controlled to cancel performing the first preset operation, the interaction panel may be displayed at a release position of the moving operation, that is, a final position where the interaction panel is moved is a display position of the interaction panel.

Optionally, after controlling the interaction panel to cancel performing the first preset operation, the interaction panel may also be displayed at a preset relative position of the target model, for example, at a position at a preset distance from the target model, or at a position at a preset distance in front of the target model.

In this embodiment, after the interaction panel is displayed around the target model and moves with the target model, when the fourth operation on the interaction panel is received, the interaction panel is controlled to cancel performing the first preset operation and displayed in the extended reality scene, and the interaction panel no longer moves with the target model. This method enables the interaction panel to move with the target model according to the user's needs, or the interaction panel to be placed into the extended reality space at any time, so that the use of the interaction panel is more flexible, different needs of the user are met, and a better experience is provided for the user.

Based on embodiment one and embodiment two, embodiment three of the present application provides an interaction method. The interaction panel is moved to the target model to enable the interaction panel to move with the target model. For the same content, reference may be made to the description of the foregoing embodiments, and the details will not be described in this embodiment again. Fig. 5 is a flowchart of an interaction method according to embodiment three of the present application. As shown in Fig. 5, the method provided in this embodiment includes the following steps.

S301: Display an interaction panel in an extended reality scene.

S302: Control the interaction panel to move in response to a moving operation on the interaction panel.

The user may move a cursor to any position of the interaction panel and drag the interaction panel to move. In an XR device, the cursor is usually controlled by an interaction ray, and the interaction ray is a ray emitted from a virtual handle or a virtual hand model. When the interaction panel has a 3D grippable part, the user may move the cursor to the grippable part of the interaction panel and drag the interaction panel to move.

To improve the user experience, the virtual hand model or the virtual handle may also be moved to any position of the interaction panel or the grippable part of the interaction panel, and the interaction panel is dragged to move, so as to simulate the user's dragging operation on an object in the physical scene.

Taking the virtual hand model as an example, the grippable part may be gripped by the virtual hand model, and the interaction panel is moved while maintaining the gripping posture.

Optionally, before the interaction panel moves, prompt information is displayed in response to a second operation on the interaction panel, and the prompt information is used to prompt to move the interaction panel towards the target model, so as to implement the interaction panel moving to the target model and moving with the target model.

The second operation includes but is not limited to a click, a double-click, a hover operation, a long press, an impact, a moving operation, a specific gesture trigger, or other operations on the interaction panel. The second operation may be different from the first operation, or may be a part of the first operation. That the second operation is a part of the first operation may be understood as that the first operation has been started but the first operation has not been completed. For example, when the first operation is the moving operation, the second operation may be a selecting operation or a starting moving operation. It may be understood that the moving operation usually includes the following stages: the user selects the target model first, and then drags the target model to move. Correspondingly, the prompt information may be displayed when the user selects the target model.

The prompt information may be one or a combination of the group consisting of text information, image information, and voice information.

Exemplarily, the prompt information is a trajectory guide line, a start point of the trajectory guide line is the grippable part, and an end point of the trajectory guide line is the target model. Optionally, the guide line has direction information, and the user is prompted to move the interaction panel towards the target model through the direction information. The direction information may be an arrow, and a direction of the arrow points to the target model.

S303: Control the interaction panel to perform a first preset operation when it is detected that a distance between the interaction panel and the target model is less than a first preset distance, where the first preset operation includes: being displayed around the target model, moving with the target model, and zooming out to a preset size.

In the process of the interaction panel moving, the distance between the interaction panel and the target model is detected, and the distance between the interaction panel and the target model may be determined by a distance between a bounding box of the interaction panel and a bounding box of the target model.

The bounding box is also referred to as a bounding volume or a collision body, and the bounding box may be considered as a transparent object that covers or surrounds all or part of the virtual object, and the bounding box may be invisible to the user.

In an implementation, when it is detected that the interaction panel overlaps with the target model, it is determined that the distance between the interaction panel and the target model is less than the first preset distance, and whether the interaction panel overlaps with the target model may be implemented by detecting whether the bounding box of the interaction panel overlaps with the bounding box of the target model.

In this embodiment, when it is detected that the distance between the interaction panel and the target model is less than the first preset distance, the interaction panel is controlled to be zoomed out and displayed at the preset position of the target model. Subsequently, when the target model moves, the interaction panel moves with the target model.

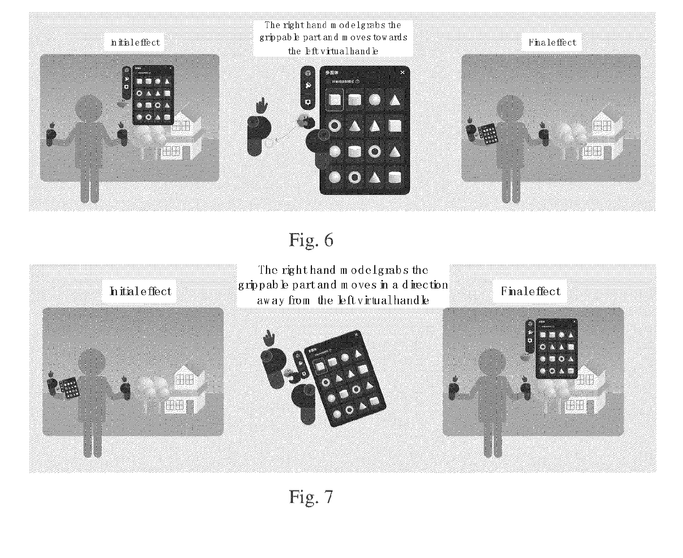

Fig. 6 is a schematic diagram of a process of attracting an interaction panel to a target model. As shown in Fig. 6, two virtual handles are displayed in the extended reality scene before the attraction, and virtual hand models are further displayed on the two virtual handles. The hand models may be understood as being integrated with the virtual handles, and the two move together. A 3D grippable part is displayed at an upper left corner of the interaction panel. When the interaction panel needs to be attracted to the virtual handle, the user controls the right hand model to grip the grippable part through the handle (physical controller). Specifically, the user controls the right hand model to move to the grippable part of the interaction panel through the handle, and then clicks on a grap key of the handle to implement the gripping operation of the right hand model on the grippable part, as shown in Fig. 6.

After the right hand model grips the grippable part, the prompt information is displayed on the UI interface. As shown in Fig. 6, the prompt information includes a dotted line with an arrow and a circle in the direction of the arrow. The dotted line is also referred to as a guide line. Optionally, the prompt information further includes text information, which may be displayed at the left hand model. For example, the text prompt information is "move the grippable part near the handle, and the interaction panel will be attracted by the handle".

According to the prompt information, the user controls the grippable part of the interaction panel to move to the left virtual handle. When the grippable part of the interaction panel moves to the left virtual handle, the interaction panel is attracted by the handle, the interaction panel is zoomed out to the preset size, and the prompt information disappears. The effect of the interaction panel being attracted to the left virtual handle is shown as the final effect in the figure.

Exemplarily, in the extended reality space, when the distance between the interaction panel and the virtual handle is 0.5 m, the grippable part of the interaction panel is gripped. 0.5 m is a distance within the user's arm span that is suitable for gripping and does not affect the use of the interaction panel. At this time, the size of the interaction panel is displayed as 100%. When the interaction panel is attracted to the virtual handle, the distance between the user and the virtual handle is about 0.25 m, and the size of the interaction panel may be zoomed out to 50%. It may be understood that the above is only a description of the distances, and the gripping distance and the size of the interaction panel are not limited to the above values.

In this embodiment, the target model does not move, and the interaction panel is moved towards the target model. When the distance between the target model and the interaction panel is less than the first preset distance, the interaction panel is attracted to the target model. Optionally, in other embodiments of the present application, the interaction panel may also be kept still, the target model is moved towards the interaction panel, or the interaction panel and the target model are moved simultaneously.

S304: Control the interaction panel to move in response to a moving operation on the interaction panel.

After the interaction panel is attracted to the target model, the interaction panel moves with the target model. At this time, if the interaction panel needs to be placed into the extended reality space, the interaction panel may be moved to be away from the target model.

S305: When it is detected that the distance between the interaction panel and the target model is greater than a second preset distance, control the interaction panel to cancel performing the first preset operation and display the interaction panel in the extended reality scene after zooming in the interaction panel to a standard size.

In the process of the interaction panel moving, the distance between the interaction panel and the target model is detected, and when the distance between the interaction panel and the target model is greater than the second preset distance, the first preset operation is cancelled.

In an implementation, when it is detected that the interaction panel no longer overlaps with the target model, it is determined that the distance between the interaction panel and the target model is greater than the second preset distance, and whether the interaction panel overlaps with the target model may be implemented by detecting whether the bounding box of the interaction panel overlaps with the bounding box of the target model.

In the case where the interaction panel is attracted to the target model by adopting the operation manner shown in Fig. 6, the interaction panel may be placed into the extended reality space by adopting the same moving operation. Fig. 7 is a schematic diagram of a process of placing an interaction panel attracted to a target model into an extended reality space. Referring to Fig. 7, the effect of the interaction panel being attracted to the target model is shown as the initial effect in the figure. When the interaction panel needs to be placed into the extended reality space, the user controls the right hand model to move to the left virtual handle through the handle (physical controller) and grip the grippable part of the interaction panel.

After the right hand model grips the grippable part, the right hand model is controlled to move away from the left virtual handle. When it is detected that the distance between the interaction panel and the target model is greater than the second preset distance, the interaction panel is automatically zoomed in to the standard size and displayed in the extended reality space. Alternatively, after the user controls the handle to release the gripping operation on the grippable part, the interaction panel is automatically zoomed in to the standard size, as shown in the final effect in the figure.

Optionally, in other embodiments of the present application, the distance between the interaction panel and the target model may not be detected. When it is detected that the moving operation ends, that is, after the user releases the moving operation, the interaction panel is controlled to cancel performing the first preset operation, and the interaction panel is zoomed in to the standard size and displayed in the extended reality scene.

In this embodiment, when the interaction panel needs to be bound to the target model, the interaction panel is moved towards the target model. When the distance between the interaction panel and the target model is less than the first preset distance, the interaction panel is controlled to be zoomed out to the preset size and displayed around the target model and move with the target model. When the interaction panel attracted to the target model needs to be placed into the extended reality space, the interaction panel is moved to be away from the target model. When the distance between the interaction panel and the target model is greater than the second preset distance, the interaction panel is zoomed in to the standard size and displayed in the extended reality scene. In this method, the interaction panel is attracted to the target model by moving the interaction panel close to the target model, and the target model is placed into the extended reality space by moving the interaction panel away from the target model, which is convenient for the user to operate.

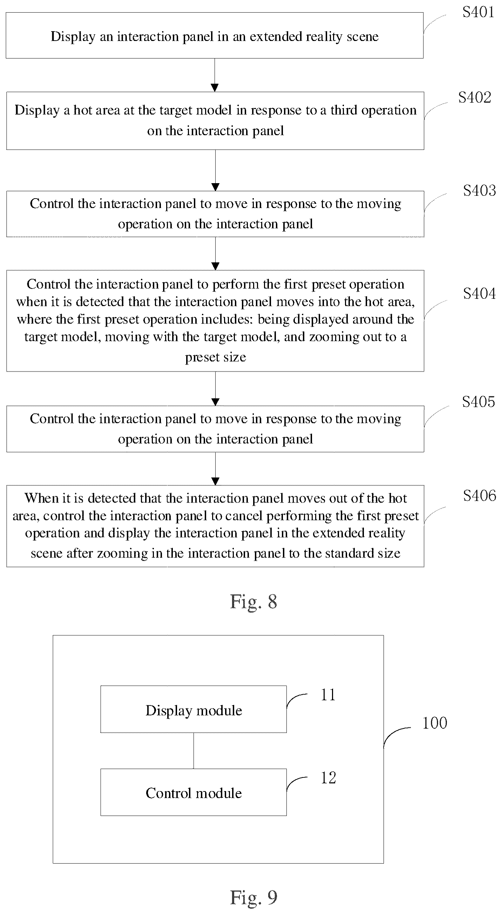

Based on embodiment one and embodiment two, embodiment four of the present application provides an interaction method. A hot area is displayed at the target model, and the interaction panel is moved to the hot area of the target model to enable the interaction panel to move with the target model. For the same content, reference may be made to the description of the foregoing embodiments, and the details will not be described in this embodiment again. Fig. 8 is a flowchart of an interaction method according to embodiment four of the present application. As shown in Fig. 8, the method provided in this embodiment includes the following steps.

S401: Display an interaction panel in an extended reality scene.

S402: Display a hot area at the target model in response to a third operation on the interaction panel.

The hot area may or may not overlap with the target model, or may partially overlap with the target model. The shape of the hot area may be a sphere, a cuboid, or irregular shape. The first preset operation takes effect only after the interaction panel or the grippable part of the interaction panel moves into the hot area.

Optionally, a guide line is further displayed in the extended reality scene, a start point of the guide line is the interaction panel, and an end point of the guide line points to the hot area through an arrow to prompt the user to move the interaction panel into the hot area. Optionally, referring to Fig. 6, the hot area may be a circular area pointed by the arrow of the guide line in Fig. 6.

Optionally, text prompt information is further displayed in the extended reality scene to prompt the user to move the interaction panel into the hot area of the target model.

The third operation includes but is not limited to a click, a double-click, a hover operation, a long press, an impact, a moving operation, a specific gesture trigger, or other operations on the interaction panel. The third operation may be different from the first operation, or may be a part of the first operation. That the third operation is a part of the first operation may be understood as that the first operation has been started but the first operation has not been completed. For example, when the first operation is the moving operation, the third operation may be a selecting operation or a starting moving operation. It may be understood that the moving operation usually includes the following stages: the user selects the target model first, and then drags the target model to move. Correspondingly, the hot area may be displayed when the user selects the target model.

S403: Control the interaction panel to move in response to the moving operation on the interaction panel.

S404: Control the interaction panel to perform the first preset operation when it is detected that the interaction panel moves into the hot area, where the first preset operation includes: being displayed around the target model, moving with the target model, and zooming out to a preset size.

Optionally, the interaction panel is controlled to perform the first preset operation when all or part of the interaction panel moves into the hot area of the target model.

When the interaction panel includes the grippable part, the interaction panel is controlled to perform the first preset operation when it is detected that the grippable part of the interaction panel moves into the hot area. Optionally, the first preset operation takes effect when all or part of the grippable part of the interaction panel moves into the hot area.

Whether the interaction panel or the grippable part of the interaction panel moves into the hot area may be detected by detecting whether the interaction panel or the grippable part of the interaction panel overlaps with the hot area. If the interaction panel or the grippable part of the interaction panel overlaps with the hot area, it is determined that the interaction panel or the grippable part of the interaction panel moves into the hot area.

S405: Control the interaction panel to move in response to the moving operation on the interaction panel.

After the interaction panel is attracted to the target model, the interaction panel moves with the target model. At this time, if the interaction panel needs to be placed into the extended reality space, the interaction panel may be moved to be away from the hot area of the target model.

S406: When it is detected that the interaction panel moves out of the hot area, control the interaction panel to cancel performing the first preset operation and display the interaction panel in the extended reality scene after zooming in the interaction panel to the standard size.

The interaction panel may be controlled to cancel performing the first preset operation when it is detected that the interaction panel completely moves out of the hot area. Optionally, in other embodiments of the present application, the interaction panel may also be controlled to cancel performing the first preset operation when it is detected that the distance between the interaction panel and the hot area of the target model is greater than the second preset distance.

In this embodiment, the hot area is displayed at the target model. When the interaction panel needs to be bound to the target model, the interaction panel is moved into the hot area of the target model. When it is detected that the interaction panel moves into the hot area, the interaction panel is controlled to be zoomed out to the preset size and displayed around the target model and move with the target model. When the interaction panel attracted to the target model needs to be placed into the extended reality space, the interaction panel is moved to be away from the hot area of the target model. When the interaction panel moves out of the hot area of the target model, the interaction panel is zoomed in to the standard size and displayed in the extended reality scene. In this method, the interaction panel is attracted to the target model by moving the interaction panel close to the hot area of the target model, which is convenient for the user to operate.

To facilitate better implementation of the interaction method according to the embodiments of the present application, an embodiment of the present application further provides an interaction apparatus. Fig. 9 is a schematic diagram of a structure of an interaction apparatus according to embodiment five of the present application. As shown in Fig. 9, the interaction apparatus 100 may include:
a display module 11, configured to display an interaction panel in an extended reality scene; and
a control module 12, configured to control the interaction panel to perform a first preset operation in response to a first operation on the interaction panel, where the first preset operation includes: being displayed around a target model and moving with the target model, and the target model is a virtual model of a controller corresponding to the extended reality scene.

In some embodiments, the interaction panel has a three-dimensional 3D grippable part; and the control module 12 is further configured to: control the interaction panel to perform the first preset operation in response to a first operation on the grippable part of the interaction panel.

In some embodiments, the first preset operation further includes: being zoomed out to a preset size.

In some embodiments, the control module 12 is further configured to: control the interaction panel to move in response to a moving operation on the interaction panel; and control the interaction panel to perform the first preset operation when it is detected that a distance between the interaction panel and the target model is less than a first preset distance.

In some embodiments, the display module 11 is further configured to: display prompt information in response to a second operation on the interaction panel, where the prompt information is used to prompt to move the interaction panel towards the target model.

In some embodiments, the prompt information is a trajectory guide line, a start point of the trajectory guide line is the grippable part, and an end point of the trajectory guide line is the target model.

In some embodiments, the control module 12 is further configured to: display a hot area at the target model in response to a third operation on the interaction panel; control the interaction panel to move in response to the moving operation on the interaction panel; and control the interaction panel to perform the first preset operation when it is detected that the interaction panel moves into the hot area.

In some embodiments, a guide line is further displayed in the extended reality scene, a start point of the guide line is the interaction panel, and an end point of the guide line points to the hot area through an arrow.

In some embodiments, after controlling the interaction panel to perform the first preset operation in response to the first operation on the interaction panel, the control module 12 is further configured to: control the interaction panel to cancel performing the first preset operation and display the interaction panel in the extended reality scene in response to a fourth operation on the interaction panel.

In some embodiments, after controlling the interaction panel to perform the first preset operation in response to the first operation on the interaction panel, the control module 12 is further configured to: in response to a fifth operation on the interaction panel, control the interaction panel to cancel performing the first preset operation and display the interaction panel in the extended reality scene after zooming in the interaction panel to the standard size.

In some embodiments, the control module 12 is further configured to: control the interaction panel to move in response to a moving operation on the interaction panel; and control the interaction panel to cancel performing the first preset operation when it is detected that a distance between the interaction panel and the target model is greater than a second preset distance.

In some embodiments, the control module 12 is further configured to: control the interaction panel to move in response to a moving operation on the interaction panel; and when it is detected that the distance between the interaction panel and the target model is greater than the second preset distance, control the interaction panel to cancel performing the first preset operation and display the interaction panel in the extended reality scene after zooming in the interaction panel to the standard size.

In some embodiments, the first preset operation further includes: controlling an attitude of the interaction panel to change according to an attitude of the target model.

In some embodiments, the first preset operation further includes: controlling an attitude of the interaction panel to change according to an attitude of a user's perspective.

In some embodiments, the interaction panel is displayed at a preset position of the target model.

In some embodiments, after controlling the interaction panel to cancel performing the first preset operation, the interaction panel is displayed at a release position of the moving operation.

In some embodiments, after controlling the interaction panel to cancel performing the first preset operation, the interaction panel is displayed at a preset relative position of the target model.

It should be understood that the apparatus embodiments and the method embodiments may correspond to each other, and reference may be made to the description of the method embodiments for similar descriptions. To avoid repetition, details will not be described herein again.

The apparatus 100 according to the embodiments of the present application is described above from the perspective of functional modules with reference to the drawings. It should be understood that the functional modules may be implemented in hardware or software instructions, or may be implemented by a combination of hardware and software modules. Specifically, the steps of the method embodiments in the embodiments of the present application may be completed by hardware integrated logic circuits in the processor and/or software instructions. The steps of the method disclosed in the embodiments of the present application may be directly embodied as being executed and completed by a hardware decoder processor, or may be executed and completed by a combination of hardware and software modules in the decoder processor. Optionally, the software module may be located in a mature storage medium in the art, such as a random-access memory, a flash memory, a read-only memory, a programmable read-only memory, an electrically erasable programmable read-only memory, and a register. The storage medium is located in the memory, and the processor reads information in the memory and completes the steps in the method embodiments described above in combination with the hardware thereof.

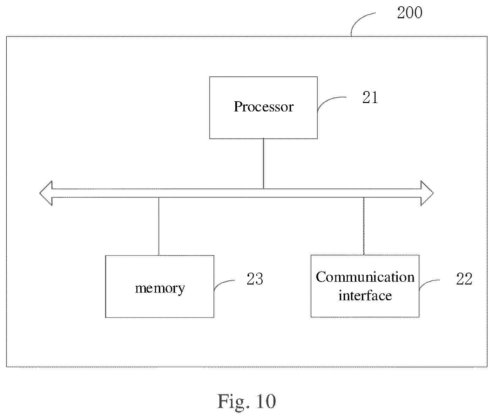

The embodiments of the present application further provide an XR device. Fig. 10 is a schematic diagram of a structure of an XR device according to embodiment six of the present application. As shown in Fig. 10, the XR device 200 may include: a memory 21 and a processor 22, where the memory 21 is configured to store a computer program, and transmit the program code to the processor 22. In other words, the processor 22 may invoke and run the computer program from the memory 21, to implement the method according to the embodiments of the present application.

For example, the processor 22 may be configured to perform the above method embodiments according to instructions in the computer program.

In some embodiments of the present application, the processor 22 may include but are not limited to: a general-purpose processor, a digital signal processor (DSP), an application-specific integrated circuit (ASIC), a field programmable gate array (FPGA) or another programmable logic device, a discrete gate or transistor logic device, a discrete hardware component, and the like.

In some embodiments of the present application, the memory 21 includes but is not limited to: a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random-access memory (RAM) used as an external cache. By way of example but not limitation, many forms of RAM are available, such as a static random-access memory (SRAM), a dynamic random-access memory (DRAM), a synchronous dynamic random-access memory (SDRAM), a double data rate synchronous dynamic random-access memory (DDR SDRAM), an enhanced synchronous dynamic random-access memory (ESDRAM), a synch link dynamic random-access memory (SLDRAM), and a direct rambus random-access memory (DR RAM).

In some embodiments of the present application, the computer program may be divided into one or more modules, and the one or more modules are stored in the memory 21 and executed by the processor 22 to complete the method provided in the present application. The one or more modules may be a series of computer program instruction segments capable of performing specific functions, and the instruction segments are used to describe an execution process of the computer program in the XR device.

As shown in Fig. 10, the XR device may further include: a transceiver 23, which may be connected to the processor 22 or the memory 21.

The processor 22 may control the transceiver 23 to communicate with other devices, specifically, send information or data to other devices, or receive information or data sent by other devices. The transceiver 23 may include a transmitter and a receiver. The transceiver 23 may further include an antenna, and the number of the antennas may be one or more.

It may be understood that although not shown in Fig. 10, the XR device 200 may further include a camera module, a Wi-Fi module, a positioning module, a Bluetooth module, a display, a controller, and the like, which will not be described in detail herein.

It should be understood that various components in the XR device are connected by a bus system, where the bus system includes not only a data bus, but also a power bus, a control bus, and a status signal bus.

The present application further provides a computer storage medium storing a computer program, and the computer program, when executed by a computer, enables the computer to perform the method according to the above method embodiments. Alternatively, an embodiment of the present application further provides a computer program product including instructions, and the instructions, when executed by a computer, enable the computer to perform the method according to the above method embodiments.

The present application further provides a computer program product, where the computer program product includes a computer program, and the computer program is stored in a computer-readable storage medium. A processor of an XR device reads the computer program from the computer-readable storage medium, and the processor executes the computer program to enable the XR device to perform a corresponding process in the method for controlling a user position in a virtual scene according to the embodiments of the present application. For brevity, details will not be described herein again.

In embodiments provided in the application, it should be understood that the disclosed systems, apparatus, and methods may be implemented in other manners. For example, the apparatus embodiments described above are merely schematic. For example, the division of the modules is merely a logical function division, and there may be other division manners in actual implementation. For example, multiple modules or components may be combined or integrated into another system, or some features may be ignored or not performed. In addition, the displayed or discussed mutual coupling or direct coupling or communication connection may be implemented through some interfaces, and the indirect coupling or communication connection between the apparatuses or modules may be in electrical, mechanical, or other forms.

The modules described as separate components may be or may not be physically separate, and the components displayed as the modules may be or may not be physical modules, that is, may be located in one place, or may be distributed to multiple network units. Some or all of the modules may be selected according to actual needs to achieve the purpose of the solutions of the embodiments. For example, various functional modules in the embodiments of the present application may be integrated into one processing module, the modules may also physically exist separately, or two or more modules may be integrated into one module.

The above are merely specific implementations of the present application, but the protection scope of the present application is not limited thereto. Any person skilled in the art may easily come up with variations or replacements within the technical scope disclosed in the present application, and such variations or replacements shall fall within the protection scope of the present application. Therefore, the protection scope of the present application shall be subject to the protection scope of the claims.

## Claims

1. An interaction method, comprising:
displaying an interaction panel in an extended reality scene; and
controlling the interaction panel to perform a first preset operation in response to a first operation on the interaction panel, wherein the first preset operation comprises: being displayed around a target model and
moving with the target model, and the target model is a virtual model of a controller corresponding to the extended reality scene.

2. The method according to claim 1, wherein the interaction panel has a three-dimensional 3D grippable part; and
the controlling the interaction panel to perform the first preset operation in response to the first operation on the interaction panel comprises:
controlling the interaction panel to perform the first preset operation in response to a first operation on the grippable part of the interaction panel.

3. The method according to claim 1 or 2, wherein the first preset operation further comprises: zooming out to a preset size.

4. The method according to any one of claims 1 to 3, wherein the controlling the interaction panel to perform the first preset operation in response to the first operation on the interaction panel comprises:
controlling the interaction panel to move in response to a moving operation on the interaction panel; and
controlling the interaction panel to perform the first preset operation when it is detected that a distance between the interaction panel and the target model is less than a first preset distance.

5. The method according to claim 4, wherein before the controlling the interaction panel to move in response to the moving operation on the interaction panel, the method further comprises:
displaying prompt information in response to a second operation on the interaction panel, wherein the prompt information is used to prompt to move the interaction panel towards the target model.

6. The method according to claim 5, wherein the prompt information is a trajectory guide line, a start point of the trajectory guide line is the interaction panel, and an end point of the trajectory guide line is the target model.

7. The method according to any one of claims 1 to 6, wherein the controlling the interaction panel to perform the first preset operation in response to the first operation on the interaction panel comprises:
displaying a hot area at the target model in response to a third operation on the interaction panel;
controlling the interaction panel to move in response to a moving operation on the interaction panel; and
controlling the interaction panel to perform the first preset operation when it is detected that the interaction panel moves into the hot area.

8. The method according to claim 7, wherein a guide line is further displayed in the extended reality scene, a start point of the guide line is the interaction panel, and an end point of the guide line points to the hot area through an arrow.

9. The method according to any one of claims 1 to 8, wherein after the controlling the interaction panel to perform the first preset operation in response to the first operation on the interaction panel, the method further comprises:
controlling the interaction panel to cancel performing the first preset operation and displaying the interaction panel in the extended reality scene in response to a fourth operation on the interaction panel.

10. The method according to claim 3, wherein after the controlling the interaction panel to perform the first preset operation in response to the first operation on the interaction panel, the method further comprises:
in response to a fifth operation on the interaction panel, controlling the interaction panel to cancel performing the first preset operation, and displaying the interaction panel in the extended reality scene after zooming in the interaction panel to a standard size.

11. The method according to claim 9, wherein the controlling the interaction panel to cancel performing the first preset operation in response to the fourth operation on the interaction panel comprises:
controlling the interaction panel to move in response to a moving operation on the interaction panel; and
controlling the interaction panel to cancel performing the first preset operation when it is detected that a distance between the interaction panel and the target model is greater than a second preset distance.

12. The method according to claim 10, wherein the in response to the fifth operation on the interaction panel, controlling the interaction panel to cancel performing the first preset operation, and displaying the interaction panel in the extended reality scene after zooming in the interaction panel to the standard size comprises:
controlling the interaction panel to move in response to a moving operation on the interaction panel; and
when it is detected that a distance between the interaction panel and the target model is greater than a second preset distance, controlling the interaction panel to cancel performing the first preset operation,
and zoom in to a standard size and display the interaction panel in the extended reality scene after zooming in the interaction panel to the standard size.

13. The method according to any one of claims 1 to 12, wherein the first preset operation further comprises:
controlling an attitude of the interaction panel to change according to an attitude of the target model.

14. The method according to any one of claims 1 to 13, wherein the first preset operation further comprises:
controlling an attitude of the interaction panel to change according to an attitude of a user's perspective.

15. The method according to any one of claims 1 to 14, wherein the interaction panel is displayed at a preset position of the target model.

16. The method according to claim 11 or 12, wherein after controlling the interaction panel to cancel performing the first preset operation, the interaction panel is displayed at a release position of the moving operation.

17. The method according to claim 9 or 10, wherein after controlling the interaction panel to cancel performing the first preset operation, the interaction panel is displayed at a preset relative position of the target model.

18. An interaction apparatus, comprising:
a display module, configured to display an interaction panel in an extended reality scene; and
a control module, configured to control the interaction panel to perform a first preset operation in response to a first operation on the interaction panel, wherein the first preset operation comprises: being displayed around a target model and moving with the target model, and the target model is a virtual model of a controller corresponding to the extended reality scene.

19. An XR device, comprising:
a processor and a memory, wherein the memory is configured to store a computer program, and the processor is configured to invoke and run the computer program stored in the memory to perform the method according to any one of claims 1 to 17.

20. A computer-readable storage medium, configured to store a computer program, wherein the computer program enables a computer to perform the method according to any one of claims 1 to 17.

21. A computer program product, comprising a computer program, wherein when the computer program is executed by a processor, the method according to any one of claims 1 to 17 is implemented.
